# NEW EUROPEAN PATENT SPECIFICATION

(11) **EP 3 606 361 B2**
(45) Date of publication and mention of the opposition decision: **10.09.2025**
(45) Mention of the grant of the patent: 16.06.2021
(21) Application number: 18725295.2
(22) Date of filing: 06.04.2018
(51) Int. Cl.: A24C 5/34, A24C 5/345, G01N 21/952

(54) **APPARATUS AND METHOD FOR REJECTION OF DEFECTIVE ROD-LIKE ARTICLES FROM A MASS FLOW OF ROD-LIKE ARTICLES OF THE TOBACCO INDUSTRY**
VORRICHTUNG UND VERFAHREN ZUR AUSSONDERUNG VON STABFÖRMIGEN ARTIKELN AUS EINEM MASSENSTROM VON STABFÖRMIGEN ARTIKELN DER TABAKINDUSTRIE
APPAREIL ET PROCÉDÉ POUR ELIMINER DES ARTICLES EN FORME DE TIGE DÉFECTUEUX À PARTIR D'UN FLUX MASSIQUE D'ARTICLES EN FORME DE TIGE DE L'INDUSTRIE DU TABAC

(30) Priority: 07.04.2017 EP 17165546; 30.08.2017 PL 42269217; 20.12.2017 PL 42396517
(43) Date of publication of application: 12.02.2020
(73) Proprietor: International Tobacco Machinery Poland SP. Z O.O., 26-600 Radom (PL)
(72) Inventor: OWCZAREK, Radoslaw, 26-600 Radom (PL)
(74) Representative: Markieta, Jaroslaw Franciszek
(86) International application number: PCT/IB2018/052402
(87) International publication number: WO 2018/185722

(56) References cited:
- GB-A- 2 228 176
- IT-B- 1 220 409
- IT-B- 1 233 661
- US-A- 4 376 484
- US-A- 4 882 938
- US-A- 4 976 544
- US-A1- 2009 193 912
- US-B1- 6 446 632

## Description

The object of the invention is apparatus and method for the rejection of defective rod-like articles from a mass flow of rod-like articles of the tobacco industry.

The devices for rejecting improperly filled cigarettes are known from the documents EP 0'853'045 A1 and GB 2'228'176 A. In prior art solutions the cigarettes are placed in a gravitational feeder or at the conveyor belt and checked by a filling sensor disposed on the tobacco side, which sensor checks the correctness of cigarette filling. Based on a signal from the sensor, a controller decides on the removal of a selected cigarette by a rejecting unit situated in the further part of the feeder in fixed positional relation with the sensor. In the disclosed solutions, the selected cigarettes are removed by means of pneumatic devices. The cigarettes which have not been rejected are pushed out one by one at the end of the feeder, which ensures a stepwise nature of the cigarette flow in the gravitational feeder.

A method and an apparatus for removal of rod-like articles of the tobacco industry from mass flow are known from the document EP 2'399'465 A1. The apparatus uses a variable volume chamber. Before the removal of a rod-like article the chamber is enlarged to form an area in which a group of rod-like articles in the chamber leaves the mass flow. An individual, randomly selected rod-like article may be removed from such group by a robot arm.

A cigarette package coding system is known from the document EP 2'768'734 B1. A printing device imprints cigarette packages transported on a conveyor before the head of the printing device. Further on the conveyor there is situated an imprint correctness checking device, and behind it there is an apparatus rejecting selected cigarette packages. The selection of a cigarette package to be rejected is based on a signal from an apparatus checking the imprint correctness sent in the case of imprint error detection.

An apparatus for receiving and removal of individual rod-like articles from the mass flow is known from the document GB 2'241'865 A. The rod-like articles are randomly removed to check the quality. The apparatus consists of a semi-cylindrical element immersed in the mass flow and having a casing in the shape of a cradle. When the casing is retracted, the rod-like articles flow in the mass flow through the semi-cylindrical element. Pulling out the casing isolates a rod-like article in the apparatus and enables extracting it from the mass flow.

An apparatus for the rejection of defective cigarettes is known from the document US 4'693'374 A. The apparatus has the form of an intermediate store in the bottom part of which the cigarettes are arranged in columns. The movement of cigarettes in the columns is stepwise. Sensors checking the cigarette production quality are adapted to test one cigarette on both mouthpiece and filter sides. The rejection of a defective cigarette is effected by means of a special extraction needle which at the first step is inserted inside a defective cigarette, and at the next step extracts the defective cigarettes. The full defective cigarette extraction cycle is coupled with an element removing the cigarettes at the end of the column.

An apparatus checking the ends of cigarettes situated in trays and extracting defective cigarettes is known from the document US 4'976'544 A. The apparatus is provided with a camera recording an image of one side of a cigarette group in a tray. The apparatus comprises further a unit rejecting a selected cigarette from the tray.

The object of the invention is an apparatus of the tobacco industry for rejection of defective rod-like articles from a mass flow of rod-like articles, according to claim 1.

The apparatus according to the invention is characterised in that the rejecting element is mounted in such a way that during the course of rejection it moves synchronously along together with the mass flow with the same speed as the defective rod-like articles in the mass flow.

The apparatus according to the invention is characterised in that the rejecting element is mounted in such a way that during the course of rejection it stops together with mass flow of rod-like articles on a conveyor, as a response for control signal from the controller.

The apparatus according to the invention is characterised in that the rejecting element is mounted in such a way that during the course of rejection it moves synchronously along together with the mass flow with the same speed as the defective rod-like articles in the mass flow, whereas the speed of the defective rod-like articles in the mass flow is constant and/or variable.

The apparatus according to the invention is characterised in that the rejecting unit further comprises at least one restraining element, disposed on the opposite side of the mass flow relative to the rejecting element, such restraining element being adapted to reject any defective rod-like article and to restrain the rod-like articles situated around the defective rod-like article to be rejected.

The apparatus according to the invention is characterised in that the monitoring unit is adapted to optically determine the geometrical parameters of the front surfaces of the rod-like articles, in particular the symmetricity, the regularity of shape of the front surface of a rod-like article, the continuity of the wrapper, the wrappings of the wrapper, and the symmetricity of insert elements visible from the front side of the article.

The apparatus according to the invention is characterised in that the monitoring unit comprises at least two cameras situated on the opposite sides of the mass flow of rod-like articles.

The apparatus according to the invention is characterised by comprising two rejecting units situated on the opposite sides of the mass flow.

The apparatus according to the invention is characterised in that rejecting unit comprises at least two rejecting elements situated on the opposite sides of the mass flow or on the same side of the mass flow. The apparatus according to the invention is characterised in that the rejecting elements can be a pusher, a compressed air, a gauge pressure, a pulling element such as a pliers or extraction needle with hooked end.

An other object of the invention is a method of rejection of defective rod-like articles from a mass flow of rod like articles on a conveyor according to claim 9.

The method according to the invention is characterised in that by means of the controller, basing on the relative position of the selected defective rod-like articles in the mass flow of rod-like articles, the sequence of rejection of the defective rod-like articles from the mass flow is determined.

The method according to the invention is characterised in that the sequence of rejection of rod-like articles from the mass flow is determined on the basis of the smallest influence on the position of successive defective rod-like article in the mass flow of rod-like articles, in particular the defective rod-like articles are rejected beginning from the uppermost layer.

The method according to the invention is characterised in that at the time of rejection of the defective rod-like article the speed of the rod-like articles in the mass flow is reduced.

The method according to the invention is characterised in that at the time of rejection of the defective rod-like article the conveying of the rod-like articles in the mass flow is halted.

The method according to the invention is characterised in that at the time of rejection of the defective rod-like article the speed of the rejecting unit is reduced.

The method according to the invention is characterised in that at the time of rejection of the defective rod-like article the rejecting unit is halted.

A system for determining the quality in the tobacco industry comprising a first apparatus for the rejection of defective rod-like articles from the mass flow of rod-like articles on a conveyor, according to claim 1, at least one a loader, a tray, an unloader, a band conveyor, or a buffer store, in particular a transport chain apparatus, a monitoring apparatus comprising a monitoring unit having optical recorders recording images of opposite side surfaces of the mass flow of rod-like articles on the conveyor, and a controller which basing on the recorded images, using criteria concerning geometrical parameters of the opposite front surfaces of rod-like articles, identifies defective rod-like articles in the mass flow.

The system according to the invention is characterised in that the controller of the monitoring apparatus further determines the position of the defective rod-like articles in the mass flow on the conveyor, and the system is further provided with a rejecting unit comprising a rejecting element adapted to reject the defective rod-like article, mounted in such a way that they move synchronously along together with the mass flow in a position enabling it to reject the defective rod-like article

The system according to the invention is characterised in that the system constitute a second apparatus for the rejection of the defective rod-like articles from the mass flow of rod-like articles on the conveyor, according to the invention.

The main advantage of the apparatus for rejection of defective rod-like articles according to the invention is the elimination of rod-like articles directly from the mass flow without disturbing the mass flow. The apparatus according to the invention may be placed in existing systems using the mass flow of rod-like articles not only to increase the production quality, but also to test the influence of devices in the production line on the production quality.

The object of the invention was shown in detail in a preferred embodiment in a drawing in which:
- Fig. 1: shows an apparatus according to the invention in a first embodiment;
- Fig. 2: shows the apparatus according to the invention in the first embodiment when a rejecting unit has moved to a position at which it may begin pushing out a defective rod-like article;
- Fig. 3: shows the apparatus according to the invention in the first embodiment when the rejecting unit has moved to a position at which pushing out of the defective rod-like article has ended;
- Fig. 3a: shows the apparatus according to the invention in the first embodiment when the rejecting unit has moved to a position at which blowing out of the defective rod-like article has ended;
- Fig. 3b: shows the apparatus according to the invention in the first embodiment when the rejecting unit has moved to a position at which suction of the defective rod-like article has ended;
- Fig. 3c: shows the apparatus according to the invention in the first embodiment when the rejecting unit has moved to a position at which pulling out by means pliers, of the defective rod-like article has ended;
- Fig. 3d: shows the apparatus according to the invention in the first embodiment when the rejecting unit has moved to a position at which pulling out by means extraction needle, of the defective rod-like article has ended;
- Fig. 4: shows the apparatus according to the invention in a second embodiment;
- Fig. 5: shows the apparatus according to the invention in a third embodiment;
- Fig. 6: shows the rejecting unit of the apparatus according to the invention in a top view;
- Fig. 7: shows a method for determining the position of a defective rod-like article in the mass flow;
- Fig. 8: shows a block diagram of a system according to the invention in a preferred embodiment;
- Fig. 9 and 10: show a side view of the mass flow containing defective rod-like articles, presenting various defects of the rod-like articles.

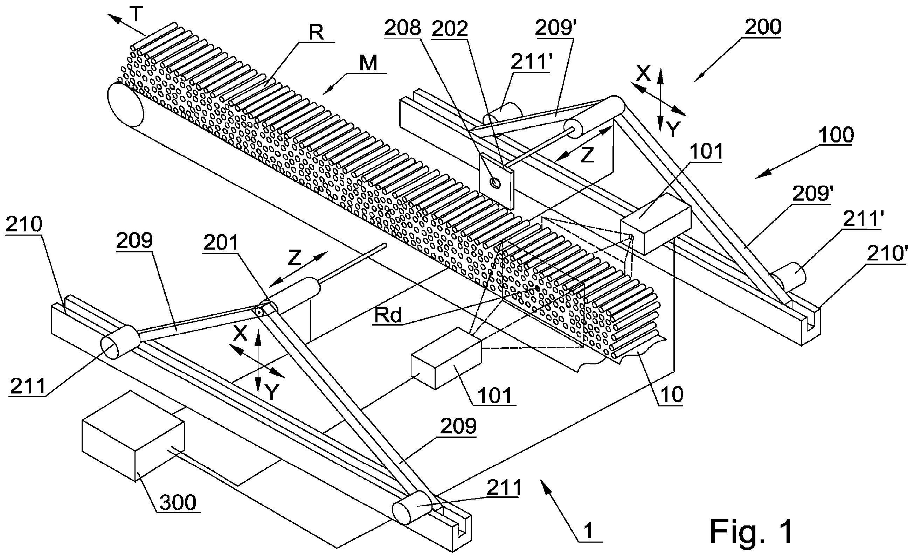

Fig. 1 shows an apparatus 1 for rejection of defective rod-like articles comprising a monitoring unit 100 and a rejecting unit 200 situated together around a mass flow of rod-like articles R. The mass flow M of rod-like articles R is effected on a conveyor 10 in the direction T.

The monitoring unit 100 comprises optical recorders 101 situated on two sides of the mass flow of rod-like articles R. The optical recorders 101 may be video cameras, photographic cameras or other devices able to record an image representing the side surfaces of the mass flow of rod-like articles R. The monitoring unit 100 has a controller which is adapted to optically determine geometrical parameters of rod-like articles R, in particular to determine the geometrical parameters of the front surface of rod-like articles R forming the mass flow M on the conveyor 10.

The rejecting unit 200 comprises a pushing element 201 and a restraining element 202. Both the pushing element 201 and the restraining element 202 are moved by means of actuators, whereas the actuator moving the pushing element 201 is adapted to make a travel being greater than the length of the rod-like articles R so that the rod-like article to be pushed out leaves the mass flow M of rod-like articles. The restraining element 202 makes movements in the axis of the rod-like articles R with a relatively small travel. The function of the restraining element 202 is to restrain the rod-like articles R situated directly around the defective rod-like article Rd to be pushed out. Due to the friction among individual articles R in the mass flow M, pushing out a defective article Rd may cause slipping out of the rod-like articles R having correct parameters. This is why the restraining element 202 has been applied.

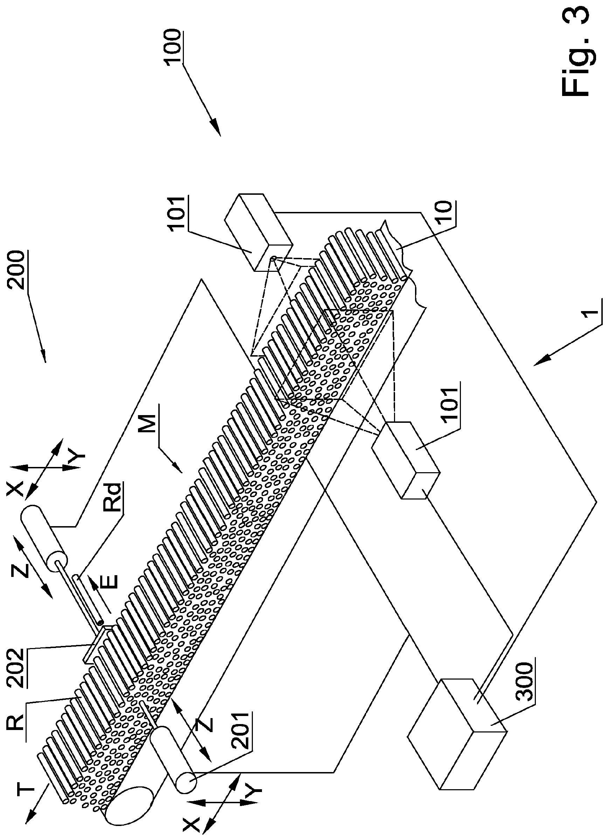

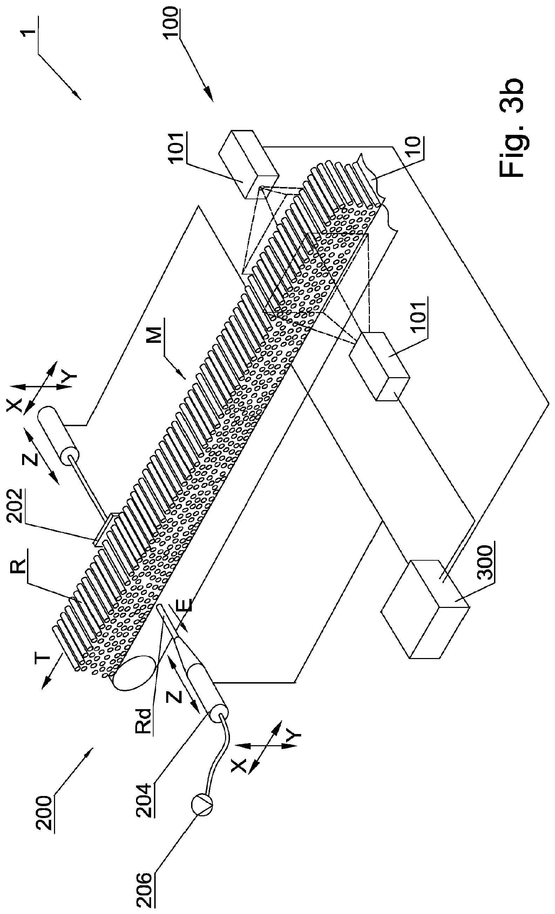

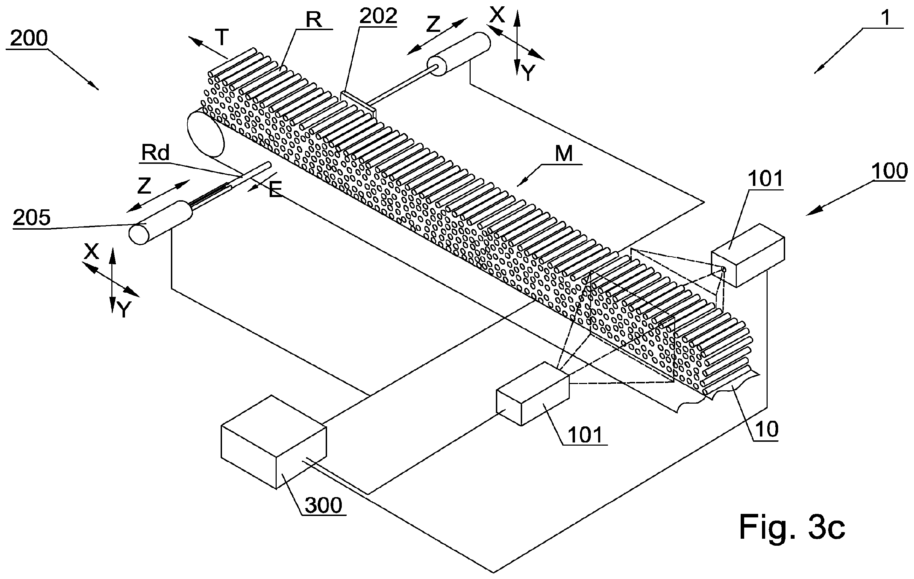

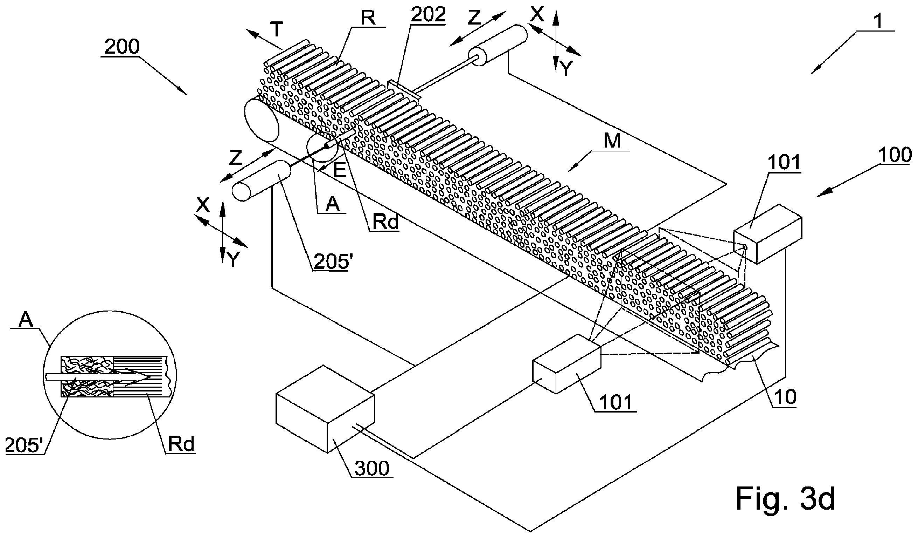

The pushing element 201 preferably has the form of a rod having a diameter smaller than or equal to the diameter of the rod-like article R, or the form of a rod provided with a pushing tip with a corresponding diameter smaller than or equal to the diameter of the rod-like article R. The restraining element 202 preferably has the form of a plate having a hole 208 with a diameter greater than the diameter of the rod-like article R. Optionally, the restraining element 202 may have the form of a ring or a set of restraining rods which make it impossible for the rod-like articles R adjacent to a defective rod-like article Rd to slip out. In other variants of the first embodiment (Fig. 3b, 3c, 3d) the restraining element 202 may have the form of a plate without hole, or other element to restrain the defective rod-like article Rd during pulling out or suction from the mass flow M of rod-like articles.

A significant feature of the rejecting unit 200 is that it is mounted in such a way that it moves synchronously along together with the mass flow M of rod-like articles R. The rejecting unit 200 can be mounted on movable arms 209, 209' driven separately one from another, moved on rails 210, 201' in direction parallel to the direction of the of the mass flow of rod-like articles on a conveyor 10 consistent with the axis X. The first end of arms 209, 209' driven by motor 211, 211' moves on the rail 210, 210' while the other end of arms are connected by pivot. By changing spacing between arms 209, 209', the height of the pushing element 201 and the restraining element 202 are changed. In order to align the pushing element 201 with the rejecting hole 208 located in the restraining element 202, the spacing between arms 209, 209' should have the same value. In other embodiment of the rejecting unit drive the pushing elemen201 and the restraining element 202 of rejecting unit 200 can be mounted on the manipulator arm. Due to the movable mounting of the rejecting unit 200, the process of pushing out defective rod-like articles Rd from the mass flow is effected without the need of dedicated stopping of the mass flow. In a situation where the mass flow stops, the rejecting unit 200 also stops and may carry out the procedure of pushing out a defective rod-like article Rd from the stopped mass flow M. Optionally, the mass flow of rod-like articles R may be stopped at the time of performance of the operation of pushing out a defective rod-like article Rd by movable the rejecting unit 200. It is possible to stopped the rejection unit 200 at the time of performance of the operation of pushing out a defective rod-like article Rd from the moving mass flow M. Preferably the movable mounting of the rejecting unit 200 is adapted in such way that at the time of performance of the operation of pushing out a defective rod-like article Rd is moving while the mass flow M with conveyor are stopped. In other embodiment mounting of the rejecting unit 200 is adapted in such way that at the time of performance of the operation of pushing out a defective rod-like article Rd, whereas mass flow M of rod-like articles R on a conveyor moves with defective rod-like articles Rd. In this embodiment the working speed of the rejecting unit 200 is high enough and the rejection time is short enough that the mass flow M remain undisturbed. Furthermore in other embodiment mounting of the rejecting unit 200 is adapted in such way that at the time of performance of rejection of the defected rod-like article Rd, is stopped together with the mass flow M.

Fig. 1 also shows a controller 300 constituting an integral part of the apparatus 1. Its function is to identify a defective rod-like article Rd basing on received data from the monitoring unit 100, and to determine its exact position in order to enable the rejecting unit 200 to push out a proper rod-like article Rd from the mass flow of rod-like articles R. The controller 300, basing on the recorded images using the criteria concerning geometrical parameters of the opposite front surfaces of rod-like articles R, identifies defective rod-like articles Rd in the mass flow M, and determines the position of defective rod-like articles Rd in the mass flow. The positioning of the recorders 101 on both sides of the mass flow M of rod-like articles R enables detecting articles whose defects occur on a single front surface. Using the recording of two images it is also possible to eliminate errors in location of defective rod-like articles caused by skewed rod-like articles R in the mass flow M.

In the embodiment shown, the image of each side of the mass flow of rod-like articles R is recorded by means of at least one camera 101. It is also possible to use two cameras on each side of the mass flow. Two cameras may be arranged at a different angle to the source of light. Such solution enables recording both reflected and scattered light. Two cameras may be also cameras of different type. The use of a colour camera allows obtaining more detailed information concerning the shape and colour of the rod-like articles, while the monochromatic cameras are considerably faster and enable more accurate tracking of changes during the flow of the rod-like articles.

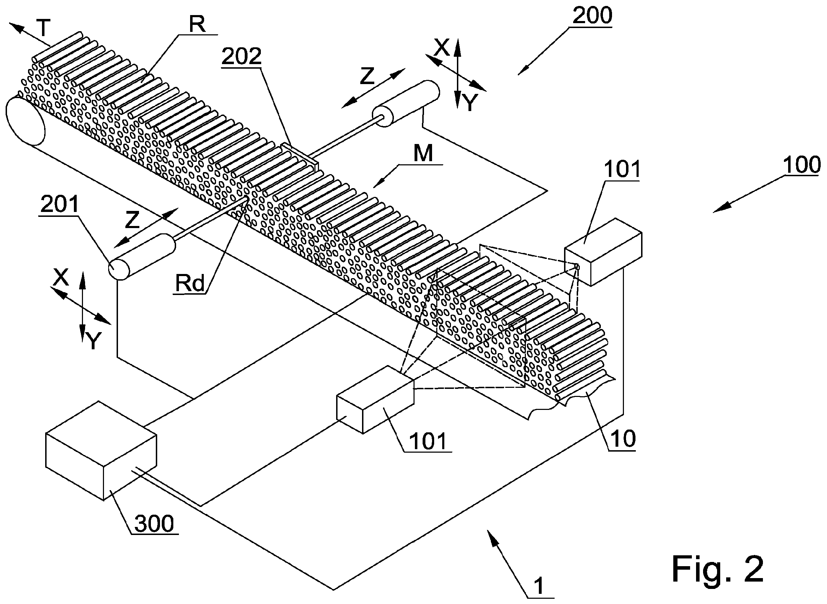

Fig. 2 shows the apparatus 1 during the operation. The monitoring unit 100 has identified a defective rod-like article Rd in the mass flow M of rod-like articles R on the conveyor 10. The controller 300, basing on the data from the monitoring unit 100, has determined the position of the defective rod-like article Rd in the mass flow M and has sent control signals to the rejecting unit 200 which has moved the pushing element 201 and the restraining element 202 to a position enabling them to push out the defective rod-like article Rd from the mass flow M. In the embodiment shown, the rejecting unit 200 moves synchronously along together with the mass flow M of rod-like articles R in the direction T. The movement of the rejecting unit 200 is adjusted to the speed of the mass flow M so that during the operation of pushing out a defective rod-like article Rd the pushing element 201, the restraining element 202, and the defective rod-like article Rd do not move relative to one another in the XY-plane. The constant reciprocal position between the rejecting unit 200 and the defective rod-like article Rd in the mass flow M is maintained in the follow-up mode regardless of whether the mass flow M moves with a constant speed or whether its speed varies or the mass flow M is stopped.

Furthermore, the pushing element 201 and the restraining element 202 may independently make movements in the perpendicular direction to the front surfaces of rod-like articles R in the mass flow M. The independent movement of the restraining element 202 towards the axis Z is effected before pushing out the defective rod-like article Rd, until a position is reached in which the front surfaces of rod-like articles R situated around the defective rod-like article Rd to be rejected are pressed by the restraining element 202. Such position of the restraining element 202 is maintained relative to the rod-like articles R until the moment of pushing out the defective rod-like article Rd from the mass flow M. The independent movement of the pushing element 201 is effected when the defective rod-like article Rd is being pushed out and consists in pushing the restraining element 202 of the defective rod-like article Rd through the rejection hole 208. The function of the pushing element 201 is to push out an individual defective rod-like article Rd from the mass flow M.

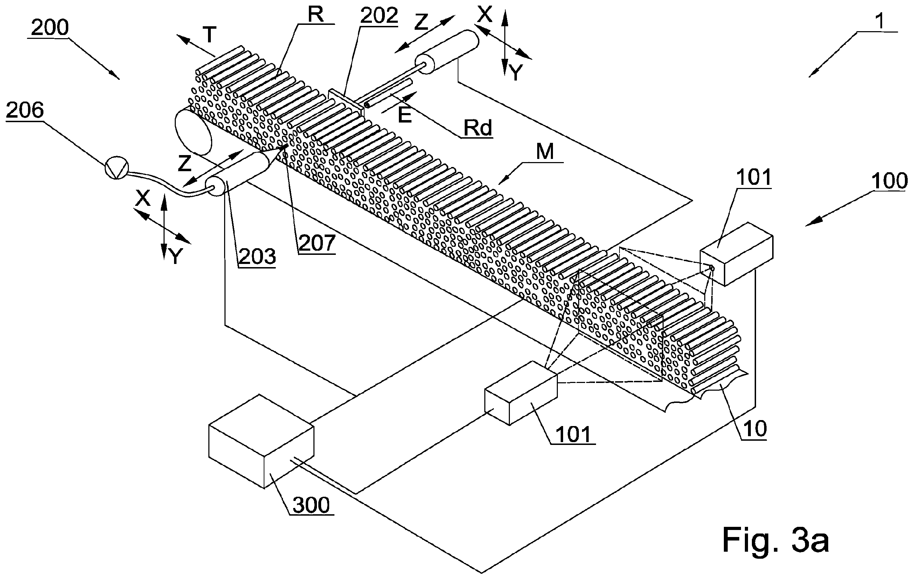

Fig. 3 shows the apparatus 1 according to the invention when the rejecting unit 200 has rejected a defective rod-like article Rd. The pushing element 201 of the rejecting unit 200 has pushed out the defective rod-like article Rd in the direction Z, outside the mass flow M, whereas the restraining element 202 during pushing out of the defective rod-like article Rd restrains the rod-like articles R adjacent to the defective rod-like article Rd. Having pushed out the defective rod-like article Rd, the restraining element 202 returns to its initial position or may move to a point at which another defective rod-like article Rd to be rejected is positioned.

Fig. 3a shows the apparatus 1 according to the invention when the rejecting unit 200 has rejected a defective rod-like article Rd. In the embodiment shown the rejecting element 203 is a compressed air nozzle connected to compressed air supply of pump 206. The compressed air stream 207 of the rejecting element 203 has corresponding diameter, blowing time and power, to blow out the defective rod-like article Rd from the mass flow M, without damaging adjacent rod-like article R. The rejecting element 203 of the rejecting unit 200 has blown out the defective rod-like article Rd in the direction E, outside the mass flow M, whereas the restraining element 202 during blowing out the defective rod-like article Rd restrains the rod-like articles R adjacent to the defective rod-like article Rd. Having blown out the defective rod-like article Rd from the mass flow M, the restraining element 202 together with the rejecting element 203 returns to its initial position or may move to a point at which another defective rod-like article Rd to be rejected is positioned.

Fig. 3b shows the apparatus 1 according to the invention when the rejecting unit 200 has rejected a defective rod-like article Rd. In the embodiment shown the rejecting element 204 is a suction nozzle to sucked out the defective rod-like article Rd from the mass flow M. The diameter of suction nozzle is much bigger that the diameter of the defective rod-like article Rd. The rejecting element 204 is connected to gauge pressure supply 206, which suck out the defective rod-like article Rd in the direction E outside the mass flow M, without disturbing the mass flow M. Having sucked out the defective rod-like article Rd from the mass flow M, the restraining element 202 together with the rejecting element 204 returns to its initial position or may move to a point at which another defective rod-like article Rd to be rejected is positioned.

Fig. 3c shows the apparatus 1 according to the invention when the rejecting unit 200 has rejected a defective rod-like article Rd. In the embodiment shown the rejecting element 205 is a pulling out element in a form of pliers to pulled out the defective rod-like article Rd from the mass flow M. Having pulled out the defective rod-like article Rd from the mass flow M, the restraining element 202 together with the rejecting element 205 returns to its initial position or may move to a point at which another defective rod-like article Rd to be rejected is positioned.

The rejecting element 205 to pulling out the defected rod-like article Rd from the mass flow M, may have form of extraction needle 205' with hooked end, showed at cross-section A in Fig. 3d. The defective rod-like element Rd is pierced deep enough by the rejecting element 205', to hooked the defective rod-like article Rd and to pulled out the defective rod-like article Rd from the mass flow M without disturbing the mass flow M.

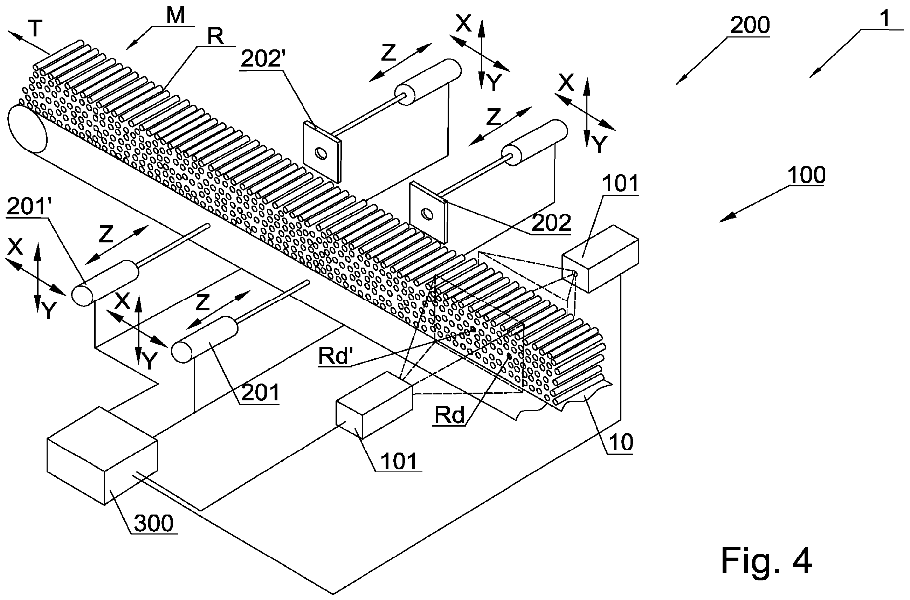

Fig. 4 shows a second embodiment of the apparatus 1 according to the invention wherein the rejecting unit 200 in a double configuration was used. The rejecting unit 200 according to the second embodiment is provided with a first rejecting element 201 and a second rejecting element 201', and with a first restraining element 202 and a second restraining element 202'. In this embodiment of the invention, the controller 300 by identifying the position of the defective rod-like articles Rd and Rd' controls the rejecting unit 200 so that the first rejecting element 201 rejects the first defective rod-like article Rd, and the second rejecting element 201' rejects the second defective rod-like article Rd'. The controller 300 is adapted to optimise the sequence of rejection of defective rod-like articles by minimising the time needed to remove all defective rod-like articles Rd, Rd' from the mass flow of rod-like articles R.

It is possible to apply other optimisation techniques, for example techniques taking into consideration not only the time needed to remove all the defective rod-like articles Rd, Rd', but also the degree of damage, the number of defective rod-like articles Rd, Rd', their position and distance relative to one another. Preferably the sequence of rejection of defective rod-like articles from the mass flow is determined on the basis of the smallest influence on the position of the next defective rod-like article Rd, Rd' in the mass flow M of rod-like articles R, in particular the defective rod-like articles Rd, Rd' are rejected beginning from the uppermost layer.

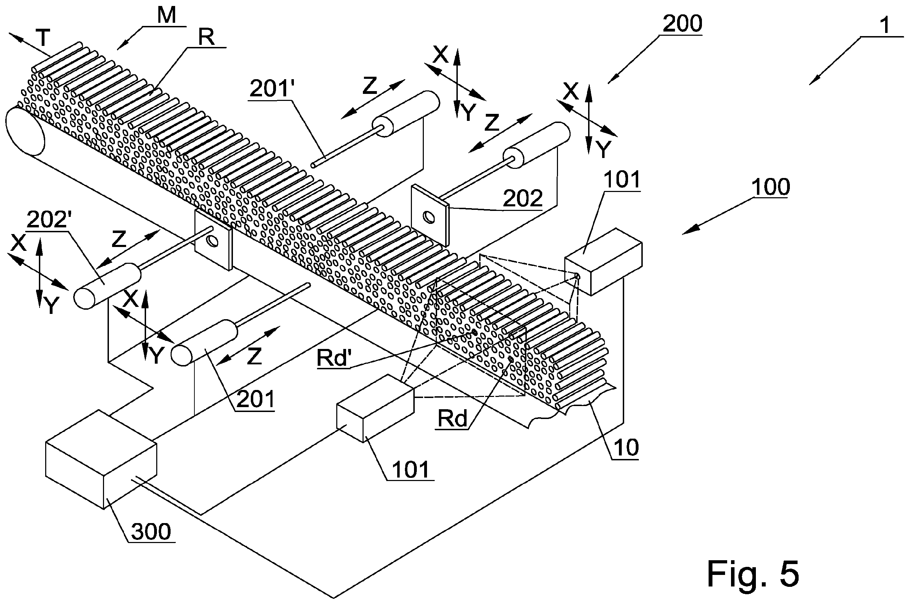

Fig. 5 shows another embodiment of the apparatus 1 according to the invention. In this embodiment, the rejecting unit 200 has a double configuration similar to the configuration of the embodiment shown in Fig. 4, modified in such a way that the rejection of defective rod-like articles Rd, Rd' is possible on both sides of the mass flow M. In this embodiment, the restraining element 202' is situated on the same side of the mass flow M of rod-like articles R as the pushing element 201. Similarly, the pushing element 201' is situated on the same side of the mass flow M of rod-like articles R as the restraining element 202.

Double configurations of the rejecting unit are used when the number of defective rod-like articles Rd, Rd' in the mass flow Mof rod-like articles R is considerable or the speed of movement of the mass flow is high, i.e. in any situation where due to mechanical limitations the use of a single rejecting unit does not ensure a sufficient efficiency.

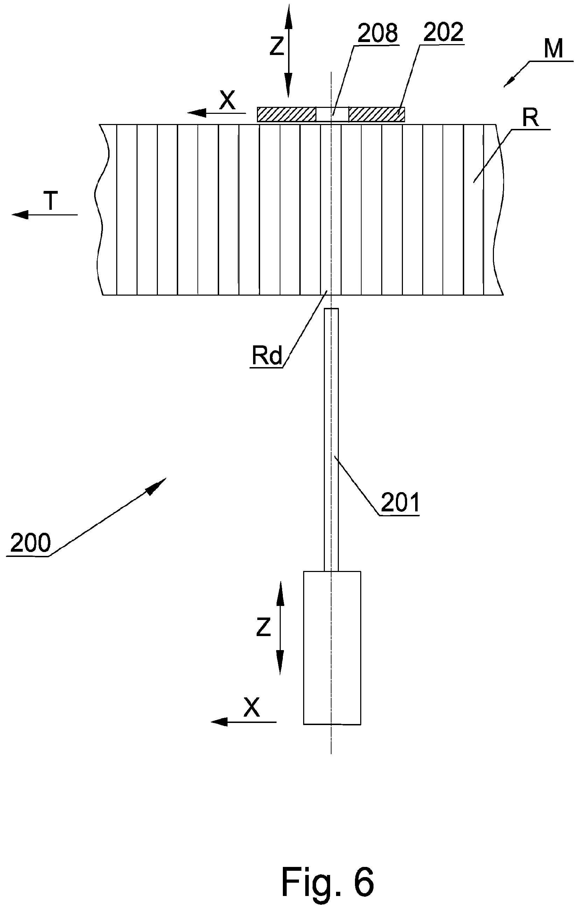

Fig. 6 shows the rejecting unit 200 of the apparatus 1 according to the invention in a top view. The restraining element 202 is shown in a cross-section taken at a level corresponding to the centre of the rejection hole 208.

The pushing element 201 and the restraining element 202 are positioned in one axis with the defective rod-like article Rd. The positioning in one axis is to be understood in such a way that the axis of the element 201 and the centre of the rejection hole 208 of the element 202 overlap the axis of the defective rod-like article Rd.

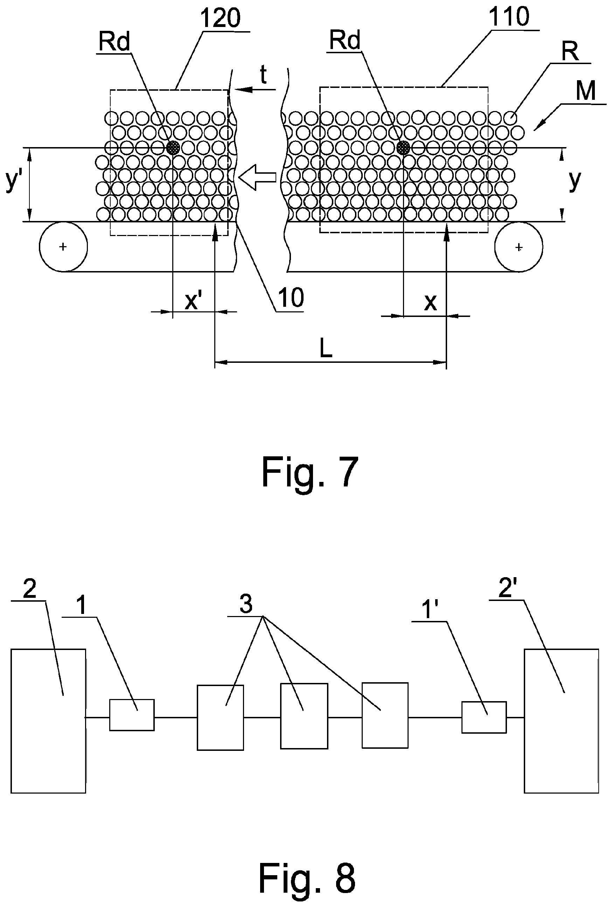

Fig. 7 shows a diagrammatic side view of the mass flow M of rod-like articles R with marked position of the defective rod-like article Rd. The coordinates x and y in the local coordinate system related to the monitoring unit 100 are determined based on the image 110 of the side surface of the mass flow M, comprising the view of the front surfaces of rod-like articles R among which the defective rod-like article Rd is situated. The system of local coordinates x', y' related to the rejecting unit 200 is situated at the distance L from the local coordinate system related to the monitoring unit 100. Preferably the mass flow M between the monitoring unit 100 and the rejecting unit 200 moves along with a constant speed, horizontally, therefore the information about the distance between the systems and the speed of movement of the mass flow M is sufficient to connect local coordinate systems and determine the position of the defective rod-like article Rd in the local coordinate system of the rejecting unit x', y'. However, also such positioning of the rejecting unit 200 relative to the monitoring unit 100 is possible where in order to determine the position of the defective rod-like article Rd in the local coordinate system the translation by a vector L comprising all components in all axes of the global coordinate system and the function of change of speed of the mass flow M in time and space will be required.

In the preferred embodiment, the position of a defective rod-like article Rd on the conveyor 10 may be defined by the position y and the position x in the local coordinate system, whereas the local coordinate system is preferably positioned in such a way that its axis y overlays the front surface of rod-like articles R situated on the conveyor 10 so that the position y is the distance from the longitudinal axis of the defective rod-like article Rd to the base of the mass flow M formed by the band of the conveyor 10. Since in the preferred embodiment the mass flow M of rod-like articles R is effected on the horizontal band conveyor 10, the position y does not change during the transport from the area of the monitoring unit 110 to the area of the rejecting unit 120. The position x is determined in relation to the origin of the local coordinate system being an arbitrarily selected point in the area of the monitoring unit 110. The local coordinate system related to the rejecting unit is determined in the space in a similar way. Having such a definition of local coordinate systems, the information about the distance between the origins of local coordinate systems is sufficient to determine the position of the defective rod-like article Rd. In the preferred embodiment of the apparatus 1 wherein the defective rod-like article Rd is being pushed out during the movement of the mass flow M, the distance L between the local coordinate systems changes with the movement of the rejecting unit 200.

The speed of movement of the mass flow M may be determined by means of a separate speed sensor (not shown) or based on the data coming from the images collected by the monitoring unit 100.

Fig. 8 shows a system for determining the quality of rod-like articles in the tobacco industry comprising the first apparatus 1 according to the invention for the rejection of defective rod-like articles from the mass flow of rod-like articles, and at least one intermediate apparatus 3, in particular a transport chain apparatus.

The system is further provided with the second apparatus 1' which is provided either only with the monitoring unit 100 or also with the rejecting unit 200 like the first apparatus 1. So preferably, in the system there are two apparatuses 1 according to the invention determining the quality of rod-like articles R at the beginning of the transport chain and at the end of the transport chain or transport chain fragment.

The apparatus 1' may constitute a truncated version of the apparatus 1 wherein the monitoring apparatus comprises the monitoring unit 100' and has optical recorders 101' recording the images of opposite side surfaces of the mass flow M of rod-like articles R on the conveyor, and the controller 300 which basing on the recorded images, using the criteria concerning geometrical parameters of the opposite front surfaces of the rod-like articles R, identifies defective rod-like articles Rd in the mass flow M. The second apparatus 1' may be further provided with the rejecting unit 200'.

The comparison of the number of defective rod-like articles Rd in the mass flow M at two points of the transport chain allows determining the influence of apparatuses 3 situated between the apparatuses 1 and 1' on the quality of the rod-like articles. The intermediate apparatuses 3 whose influence on the quality of the rod-like articles R may be determined include for example a loader, a tray, an unloader, a band conveyor, and a buffer store.

The system being situated between a delivery unit 2, to deliver the rod-like articles R to the system and a receiving unit 2', to receive the rod-like articles R from the system.

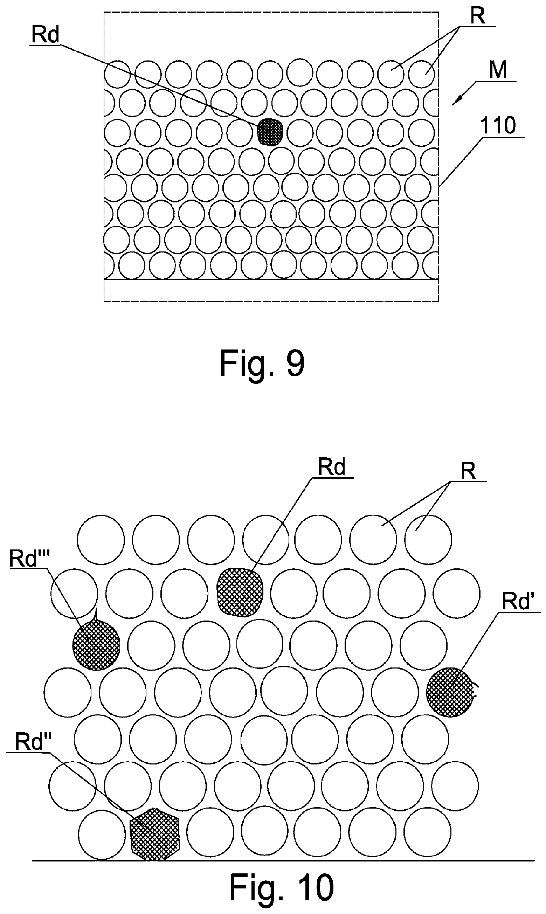

Figs. 9 and 10 show an example fragment of the mass flow M of rod-like articles R in the area of the monitoring unit 110 recorded by one of the optical recorders. The shown example fragment comprises a group of rod-like articles R among which a defective rod-like article Rd is situated. Fig. 10 shows examples of defects of the rod-like articles R which may be detected in the apparatus according to the invention, these include circumferential deformations Rd, tears Rd', squashings Rd", burrs Rd'" and the like, being visible on any of the front surfaces of the defective rod-like article R, in particular the symmetricity, the regularity of shape of the front surface of a rod-like article R, the continuity of the wrapper, the wrappings of the wrapper, and the symmetricity of insert elements visible from the front side of the article.

An advantage of the method, the apparatus and the system according to the invention is that they may be installed in existing transport systems, they do not affect the mass flow M and the process of transport of the rod-like articles R, in addition, all the rod-like articles R flowing in the mass flow M are analysed, enable detecting defects occurring on both sides or on one side regardless of the side on which such defects occurs.

## Claims

1. An apparatus of the tobacco industry for rejection of defective rod-like articles from a mass flow of rod-like articles, comprising
a monitoring unit (100) adapted to optically determine geometrical parameters of rod-like articles (R), and
at least one rejecting unit (200) adapted to remove a rod-like article from the mass flow (M) of rod-like articles (R), wherein the mass flow (M) being transported on the conveyor (10), moreover the rejecting unit (200) being placed behind the monitoring unit (100) with reference to the direction (T) of the mass flow of rod-like articles (R)
**characterised in that**
the monitoring unit (100) has optical recorders (101) adapted to recording images of opposite side surfaces of the mass flow (M) of rod-like articles (R) on a conveyor (10), wherein said side surfaces are formed by front surfaces or rod-like articles (R) moreover
the apparatus comprises a controller (300) adapted to identify defective rod-like articles (Rd) in the mass flow, and determine the position of the defective rod-like articles (Rd) in the mass flow, basing on the recorded images, using criteria concerning the geometrical parameters of the opposite front surfaces of rod-like articles (R), and determine the speed of the mass flow (M), moreover the controller (300) adapted to generate the rejecting unit (200) control signals based on a position of the defective rod-like articles (Rd) in the mass flow and the speed of the mass flow (M), and
the rejecting unit (200) comprises at least one rejecting element (201, 203, 204, 205, 205') adapted to reject the defective rod-like article (Rd), the rejection unit being adapted to move in a direction downstream of the mass flow (M) in relation to the monitoring unit (100) synchronously along together with the mass flow (M) in a position enabling it to reject the defective rod-like article (Rd) and reject the defective rod-like article (Rd) as a response for control signals from the controller (300).

2. The apparatus as in claim 1 **characterised in that** the rejecting element (201, 203, 204, 205, 205') is adapted that during the course of rejection it moves along together with the mass flow (M) with the same speed as the defective rod-like articles (Rd) in the mass flow (M) as a response for control signal from the controller (300).

3. The apparatus as in claim 1 **characterised in that** the rejecting element (201, 203, 204, 205, 205') is adapted that during the course of rejection it moves whereas mass flow (M) of rod-like articles (R) on a conveyor (10) stops, as a response for control signal from the controller (300).

4. The apparatus as in claim 1 **characterised in that** the rejecting element (201, 203, 204, 205, 205') is mounted adapted that during the course of rejection it stops whereas mass flow (M) of rod-like articles (R) on a conveyor (10) moves with defective rod-like articles (Rd), as a response for control signal from the controller (300).

5. The apparatus as in claim 1 **characterised in that** the rejecting element (201, 203, 204, 205, 205') is adapted that during the course of rejection it stops together with mass flow (M) of rod-like articles (R) on a conveyor (10), as a response for control signal from the controller (300).

6. The apparatus as in any of the claims 1 to 5 **characterised in that** the rejecting unit (200) further comprises at least one restraining element (202, 202'), disposed on the opposite side of the mass flow (M) relative to the rejecting element (201, 203, 204, 205, 205'), the restraining element (202, 202'), being adapted to reject the defective rod-like article (Rd) and to restrain the rod-like articles (R) situated around the defective rod-like article (Rd) to be rejected.

7. The apparatus as in any of the claims 1 to 6 **characterised in that** the monitoring unit (100) is adapted to optically determine the geometrical parameters of the front surfaces of the rod-like articles (R), in particular symmetricity, regularity of shape of the front surface of a rod-like article, continuity of the wrapper, wrappings of the wrapper, and symmetricity of insert elements visible from the front side of the rod-like article (R).

8. The apparatus as in any of the claims 1 to 7 **characterised in that** the rejecting element (201, 203, 204, 205, 205') can be a pusher, a compressed air, a gauge pressure, a pulling element such as a pliers or extraction needle with hooked end.

9. A method of rejection of defective rod-like articles from a mass flow of rod-like articles on a conveyor, **characterised by** comprising steps at which:
recording images of opposite front surfaces of the mass flow (M) of rod-like articles (R) by means of optical recorders (101);
identifying defective rod-like articles (Rd) in the mass flow (M) by means of a controller (300) based on images of the side surfaces of the mass flow (M) using the criteria relating to geometrical parameters of the opposite front surfaces of rod-like articles (R), and
determining a position of defective rod-like articles (Rd) in the mass flow (M) on the conveyor (10); and
determining a speed of the mass flow (M), and further
generating control signals for rejecting unit (200) to move the rejecting element to rejecting position determined based on the position of the defective rod-like articles (Rd) identified in the mass flow (M) on the conveyor (10) and the speed of the mass flow (M),
moving the rejecting element of the rejecting unit (200) in a direction downstream of the mass flow (M) in relation to the monitoring unit (100) synchronously along together with the mass flow (M) in the rejecting position and rejected identified defective rod-like article (Rd) from the mass flow (M) of rod-like articles (R) in a response to control signals from the controller (300).

10. The method as in claim 9 **characterised in that** by means of the controller (300), basing on the relative position of the selected defective rod-like articles (Rd) in the mass flow (M) of rod-like articles (R), the sequence of rejection of the defective rod-like articles (Rd) from the mass flow (M) is determined.

11. The method as in claim 10 **characterised in that** the sequence of rejection of the defective rod-like articles (Rd) from the mass flow (M) is such that the defective rod-like articles (Rd) are rejected beginning from the uppermost layer of the mass flow.

12. The method as in any of the claims 9 to 11 **characterised in that** at the time of rejection of the defective rod-like articles (Rd), the speed of the rod-like articles (R) in the mass flow (M) is reduced.

13. The method as in any of the claims 9 to 12 **characterised in that** at the time of rejection of the defective rod-like article (Rd) the conveying of the rod-like articles (R) in the mass flow (M) is halted.

14. The method as in any of the claims 9 to 11 **characterised in that** at the time of rejection of the defective rod-like article (Rd) the speed of the rejecting unit (200) is reduced.

15. The method as in any of the claims 9 to 11 **characterised in that** at the time of rejection of the defective rod-like article (Rd) the rejecting unit (200) is halted .

16. A system for determining quality of rod-like articles in the tobacco industry comprising
a first apparatus (1) for the rejection of defective rod-like articles (Rd) from mass flow (M) of rod-like articles (R) on a conveyor (10), as in any of the claims 1 to 12,
at least one a loader, a tray, an unloader, a band conveyor, or a buffer store placed downstream of the first apparatus for rejection of defective rod-like articles,
at least one monitoring apparatus placed downstream of a loader, a tray, an unloader, a band conveyor, or a buffer store, while monitoring apparatus comprising a monitoring unit (100) having optical recorders (101') recording images of the opposite side surfaces of the mass flow (M) of rod-like articles (R) on the conveyor (10), and a controller (300) adapted to identify defective rod-like articles (Rd) in the mass flow based on the recorded images, using a criteria concerning the geometrical parameters of the opposite front surfaces of rod-like articles (R), which basing on the recorded images, using criteria concerning geometrical parameters of the opposite front surfaces of rod-like articles (R), identifies defective rod-like articles (Rd) in the mass flow (M), to establish the change in the quality of the rod-like articles in the mass flow after passing a loader, a tray, an unloader, a band conveyor, or a buffer store.

17. The system as in claim 16 **characterised in that**
the controller of the monitoring apparatus (300') further determines the position of the defective rod-like articles (Rd) in the mass flow (M) on the conveyor (10), and determines the speed of the mass flow (M), then generates rejecting unit (200) control signals, and the system is further provided with
a rejecting unit (200') comprising a rejecting element and a restraining element adapted to reject the defective rod-like article (Rd), adapted to move downstream of the mass flow (M) to a position enabling it to reject the defective rod-like article (Rd) in a response to control signals from the controller (300').

18. The system as in claim 16 or 17 **characterised in that** the system comprises a second apparatus for the rejection of the defective rod-like articles (Rd) from the mass flow of rod-like articles (R) on the conveyor (10), as in any of the claims 1 to 12.

## Patentansprüche

1. Vorrichtung der Tabakindustrie zur Zurückweisung von fehlerhaften stabförmigen Gegenständen aus einem Massenstrom von stabförmigen Gegenständen, umfassend
eine Überwachungseinheit (100), die dazu angepasst ist, geometrische Parameter von stabförmigen Gegenständen (R) optisch zu bestimmen, und
mindestens eine Zurückweisungseinheit (200), die dazu angepasst ist, einen stabförmigen Gegenstand aus dem Massenstrom (M) von stabförmigen Gegenständen (R) zu entfernen, wobei der Massenstrom (M) auf dem Förderer (10) transportiert wird, wobei außerdem die Zurückweisungseinheit (200) in Bezug auf die Richtung (T) des Massenstroms von stabförmigen Gegenständen (R) hinter der Überwachungseinheit (100) angeordnet ist,
**dadurch gekennzeichnet, dass**
die Überwachungseinheit (100) optische Rekorder (101) aufweist, die zum Aufzeichnen von Bildern gegenüberliegender Seitenflächen des Massenstroms (M) von stabförmigen Gegenständen (R) auf einem Förderer (10) angepasst sind, wobei die Seitenflächen durch Frontflächen oder stabförmige Gegenstände (R) gebildet sind, und darüber hinaus
die Vorrichtung eine Steuerung (300) umfasst, die dazu ausgelegt ist, fehlerhafte stabförmige Gegenstände (Rd) in dem Massenstrom zu identifizieren und die Position der fehlerhaften stabförmigen Gegenstände (Rd) im Massenstrom zu bestimmen, basierend auf den aufgezeichneten Bildern, unter Verwendung von Kriterien bezüglich der geometrischen Parameter der gegenüberliegenden Frontflächen von stabförmigen Gegenständen (R), und die Geschwindigkeit des Massenstroms (M) zu bestimmen, wobei darüber hinaus die Steuerung (300) dazu angepasst ist, die Steuersignale für die Zurückweisungseinheit (200) basierend auf einer Position der fehlerhaften stabförmigen Gegenstände (Rd) in dem Massenstrom und der Geschwindigkeit des Massenstroms (M) zu erzeugen, und
die Zurückweisungseinheit (200) mindestens ein Zurückweisungselement (201, 203, 204, 205, 205') umfasst, das dazu angepasst ist, diefehlerhaften stabförmigen Gegenstände (Rd) zurückzuweisen, wobei die Zurückweisungseinheit dazu angepasst ist, sich in einer Stromabwärts-Richtung des Massenstroms (M) in Bezug auf die Überwachungseinheit (100) synchron zusammen mit dem Massenstrom (M) in eine Position zu bewegen, die es ihr ermöglicht, die fehlerhaften stabförmigen Gegenstände (Rd) zurückzweisen, und die fehlerhaften stabförmigen Gegenstände (Rd) als Antwort auf Steuersignale von der Steuerung (300) zurückzuweisen.

2. Vorrichtung nach Anspruch 1, **dadurch gekennzeichnet, dass** das Zurückweisungselement (201, 203, 204, 205, 205') so angepasst ist, dass es sich als Antwort auf das Steuersignal von der Steuerung (300) im Verlauf des Zurückweisens zusammen mit dem Massenstrom (M) mit der gleichen Geschwindigkeit wie die fehlerhaften stabförmigen Gegenstände (Rd) im Massenstrom (M) bewegt.

3. Vorrichtung nach Anspruch 1, **dadurch gekennzeichnet, dass** das Zurückweisungselement (201, 203, 204, 205, 205') so angepasst ist, dass es sich als Antwort auf das Steuersignal von der Steuerung (300) im Verlauf des Zurückweisens bewegt, während der Massenstrom (M) von stabförmigen Gegenständen (R) auf einem Förderer (10) stoppt.

4. Vorrichtung nach Anspruch 1, **dadurch gekennzeichnet, dass** das Zurückweisungselement (201, 203, 204, 205, 205') so montiert und angepasst ist, dass es als Antwort auf das Steuersignal von der Steuerung (300) im Verlauf des Zurückweisens stoppt, während sich der Massenstrom (M) von stabförmigen Gegenständen (R) auf einem Förderer (10) mit fehlerhaften stabförmigen Gegenständen (Rd) bewegt.

5. Vorrichtung nach Anspruch 1, **dadurch gekennzeichnet, dass** das Zurückweisungselement (201, 203, 204, 205, 205') so angepasst ist, dass es als Antwort auf das Steuersignal von der Steuerung (300) im Verlauf des Zurückweisens zusammen mit dem Massenstrom (M) von stabförmigen Gegenständen (R) auf einem Förderer (10) stoppt.

6. Vorrichtung nach einem der Ansprüche 1 bis 5, **dadurch gekennzeichnet, dass** die Zurückweisungseinheit (200) ferner mindestens ein Rückhalteelement (202, 202') umfasst, das auf der gegenüberliegenden Seite des Massenstroms (M) relativ zu dem Zurückweisungselement (201, 203, 204, 205, 205') angeordnet ist, wobei das Rückhalteelement (202, 202') dazu angepasst ist, den fehlerhaften stabförmigen Gegenstand (Rd) zurückzuweisen und die stabförmigen Gegenstände (R), die sich um den fehlerhaften stabförmigen Gegenstand (Rd) befinden, der verworfen werden soll, zurückzuhalten.

7. Vorrichtung nach einem der Ansprüche 1 bis 6, **dadurch gekennzeichnet, dass** die Überwachungseinheit (100) dazu angepasst ist, die geometrischen Parameter der Vorderflächen der stabförmigen Gegenstände (R) optisch zu bestimmen, insbesondere Symmetrie, Regelmäßigkeit von Form der Vorderseite eines stabförmigen Gegenstands, Kontinuität der Umhüllung, Wicklungen der Umhüllung und Symmetrie der Einsatzelemente, die von der Vorderseite des stabförmigen Gegenstandes (R) sichtbar sind.

8. Vorrichtung nach einem der Ansprüche 1 bis 7, **dadurch gekennzeichnet, dass** das Zurückweisungselement (201, 203, 204, 205, 205') ein Drücker, eine Druckluft, ein Überdruck, ein Zugelement wie eine Zange oder Extraktionsnadel mit Hakenende sein kann.

9. Verfahren zum Zurückweisen von fehlerhaften stabförmigen Gegenständen aus einem Massenstrom von stabförmigen Gegenständen auf einem Förderer, **gekennzeichnet durch** das Ausführen von Schritten, bei denen erfolgt:
Aufzeichnen von Bildern gegenüberliegender Vorderflächen des Massenstroms (M) von stabförmigen Gegenständen (R) mittels optischer Rekorder (101);
Identifizieren fehlerhafter stabförmiger Gegenstände (Rd) im Massenstrom (M) mittels einer Steuerung (300) anhand von Bildern der Seitenflächen des Massenstroms (M) unter Verwendung der Kriterien in Bezug auf geometrische Parameter der gegenüberliegenden Vorderflächen stabförmiger Gegenstände (R); und
Bestimmen einer Position von fehlerhaften stabförmigen Gegenständen (Rd) im Massenstrom (M) auf dem Förderer (10); und
Bestimmen einer Geschwindigkeit des Massenstroms (M), und weiterhin
Generieren von Steuersignalen für die Zurückweisungseinheit (200), um das Zurückweisungselement in eine Zurückweisungsposition zu bewegen, die basierend auf der Position der fehlerhaften stabförmigen Gegenstände (Rd), die in dem Massenstrom (M) auf dem Förderer (10) identifiziert werden, und der Geschwindigkeit des Massenstroms (M) bestimmt wird,
Bewegen des Zurückweisungselements der Zurückweisungseinheit (200) in einer Stromabwärts-Richtung des Massenstroms (M) in Bezug auf die Überwachungseinheit (100) synchron zusammen mit dem Massenstrom (M) in die Zurückweisungsposition und zurückgewiesen eines identifizierten fehlerhaften stabförmigen Gegenstands (Rd) aus dem Massenstrom (M) von stabförmigen Gegenständen (R) als Reaktion auf Steuersignale von der Steuerung (300).

10. Verfahren nach Anspruch 9, **dadurch gekennzeichnet, dass** mittels der Steuerung (300), basierend auf der relativen Position der ausgewählten fehlerhaften stabförmigen Gegenstände (Rd) in dem Massenstrom (M) der stabförmigen Gegenstände (R), die Reihenfolge des Zurückweisens der fehlerhaften stabförmigen Gegenstände (Rd) aus dem Massenstrom (M) bestimmt wird.

11. Verfahren nach Anspruch 10, **dadurch gekennzeichnet, dass** die Reihenfolge des Zurückweisens der fehlerhaften stabförmigen Gegenstände (Rd) aus dem Massenstrom (M) derart ist, dass die fehlerhaften stabförmigen Gegenstände (Rd) beginnend von der obersten Schicht des Massenstroms zurückgewiesen werden.

12. Verfahren nach einem der Ansprüche 9 bis 11, **dadurch gekennzeichnet, dass** zum Zeitpunkt des Zurückweisens der fehlerhaften stabförmigen Gegenstände (Rd) die Geschwindigkeit der stabförmigen Gegenstände (R) in dem Massenstrom (M) reduziert wird.

13. Verfahren nach einem der Ansprüche 9 bis 12, **dadurch gekennzeichnet, dass** zum Zeitpunkt des Zurückweisens des fehlerhaften stabförmigen Gegenstands (Rd) das Befördern der stabförmigen Gegenstände (R) in dem Massenstrom (M) angehalten wird.

14. Verfahren nach einem der Ansprüche 9 bis 11, **dadurch gekennzeichnet, dass** zum Zeitpunkt des Zurückweisens des fehlerhaften stabförmigen Gegenstands (Rd) die Geschwindigkeit der Zurückweisungseinheit (200) reduziert wird.

15. Verfahren nach einem der Ansprüche 9 bis 11, **dadurch gekennzeichnet, dass** zum Zeitpunkt des Zurückweisens des fehlerhaften stabförmigen Gegenstands (Rd) die Zurückweisungseinheit (200) angehalten wird.

16. System zum Bestimmen der Qualität von stäbchenförmigen Gegenständen in der Tabakindustrie, umfassend
eine erste Vorrichtung (1) zur Zurückweisung von fehlerhaften stangenförmigen Gegenständen (Rd) aus einem Massenstrom (M) von stabförmigen Gegenständen (R) auf einem Förderer (10) nach einem der Ansprüche 1 bis 12,
zumindest einen Lader, eine Schale, einen Entlader, einen Bandförderer oder einen Pufferspeicher, der oder die stromabwärts der ersten Vorrichtung angeordnet ist, um fehlerhafte stabförmige Gegenstände zurückzuweisen;
zumindest eine Überwachungsvorrichtung, die stromabwärts eines Laders, einer Schale, eines Entladers, eines Bandförderes oder eines Pufferspeichers angeordnet ist, wobei die Überwachungsvorrichtung eine Überwachungseinheit (100) mit optischen Rekordern (101') umfasst, die Bilder der gegenüberliegenden Seitenflächen des Massenstroms (M) von stabförmigen Gegenständen (R) auf dem Förderer (10) aufzeichnen, und eine Steuerung (300) umfasst, die dazu angepasst ist, fehlerhafte stabförmige Gegenstände (Rd) in dem Massenstrom basierend auf den aufgezeichneten Bildern unter Verwendung eines Kriteriums zu identifizieren, das sich auf geometrische Parameter der gegenüberliegenden Frontflächen von stabförmigen Gegenständen (R) bezieht, welche basierend auf den aufgezeichneten Bildern und unter Verwendung von Kriterien bezüglich der geometrischen Parameter der gegenüberliegenden Frontflächen von stabförmigen Gegenständen (R) fehlerhafte stabförmige Gegenstände (Rd) in dem Massenstrom (M) identifizieren, um die Änderung der Qualität der stabförmigen Gegenstände in dem Massenstrom nach dem Passieren eines Laders, einer Schale, eines Entladers, eines Bandförderers oder eines Pufferspeichers festzustellen.

17. System nach Anspruch 16, **dadurch gekennzeichnet, dass**
die Steuerung der Überwachungsvorrichtung (300') ferner die Position der fehlerhaften stabförmigen Gegenstände (Rd) in dem Massenstrom (M) auf dem Förderer (10) bestimmt und die Geschwindigkeit des Massenstroms (M) bestimmt und sodann Steuersignale für die Zurückweisungseinheit (200) generiert, und das System ferner versehen ist mit
einer Zurückweisungseinheit (200'), die ein Zurückweisungselement und ein Rückhalteelement umfasst, dazu angepasst ist, den fehlerhaften stabförmigen Gegenstand (Rd) zuzurückweisen, und dazu angepasst ist, sich stromabwärts des Massenstroms (M) in eine Position zu bewegen, die es ihr ermöglicht, den fehlerhaften stabförmigen Gegenstand (Rd) als Reaktion auf Steuersignale von der Steuerung (300') zurückzuweisen.

18. System nach Anspruch 16 oder 17, **dadurch gekennzeichnet, dass** das System eine zweite Vorrichtung zum Zurückweisen der fehlerhaften stabförmigen Gegenstände (Rd) aus dem Massenstrom von stabförmigen Gegenständen (R) auf dem Förderer (10) nach einem der Ansprüche 1 bis 12 umfasst.

## Revendications

1. Appareil de l'industrie du tabac pour le rejet d'articles en forme de tige défectueux à partir d'un flux massique d'articles en forme de tige, comprenant
une unité de surveillance (100) adaptée pour déterminer optiquement des paramètres géométriques d'articles en forme de tige (R), et
au moins une unité de rejet (200) adaptée pour retirer un article en forme de tige du flux massique (M) d'articles en forme de tige (R), le flux massique (M) étant transporté sur le convoyeur (10), dans lequel l'unité de rejet (200) est en outre placée derrière l'unité de surveillance (100) par rapport à la direction (T) du flux massique d'articles en forme de tige (R)
**caractérisé en ce que**
l'unité de surveillance (100) comporte des enregistreurs optiques (101) adaptés pour enregistrer des images de surfaces latérales opposées du flux massique (M) d'articles en forme de tige (R) sur un convoyeur (10), dans lequel lesdites surfaces latérales sont formées par des surfaces frontales ou des articles en forme de tige (R), en outre
l'appareil comprend un contrôleur (300) adapté pour identifier des articles en forme de tige défectueux (Rd) dans le flux massique, et déterminer la position des articles en forme de tige défectueux (Rd) dans le flux massique, en se basant sur les images enregistrées, en utilisant des critères concernant les paramètres géométriques des surfaces frontales opposées d'articles en forme de tige (R), et déterminer la vitesse du flux massique (M), en outre le contrôleur (300) étant adapté pour générer les signaux de commande de l'unité de rejet (200) sur la base d'une position des articles en forme de tige défectueux (Rd) dans le flux massique et de la vitesse du flux massique (M), et
l'unité de rejet (200) comprend au moins un élément de rejet (201, 203, 204, 205, 205') adapté pour rejeter l'article en forme de tige défectueux (Rd), l'unité de rejet étant adaptée pour se déplacer dans une direction en aval du flux massique (M) par rapport à l'unité de surveillance (100) de manière synchrone conjointement avec le flux massique (M) dans une position lui permettant de rejeter l'article en forme de tige défectueux (Rd) et rejeter l'article en forme de tige défectueux (Rd) en réponse à des signaux de commande provenant du contrôleur (300).

2. Appareil selon la revendication 1, **caractérisé en ce que** l'élément de rejet (201, 203, 204, 205, 205') est adapté de sorte que, au cours du rejet, il se déplace conjointement avec le flux massique (M) à la même vitesse que les articles en forme de tige défectueux (Rd) dans le flux massique (M) en réponse à un signal de commande provenant du contrôleur (300).

3. Appareil selon la revendication 1, **caractérisé en ce que** l'élément de rejet (201, 203, 204, 205, 205') est adapté de sorte que, au cours du rejet, il se déplace alors que le flux massique (M) d'articles en forme de tige (R) sur un convoyeur (10) s'arrête, en réponse à un signal de commande provenant du contrôleur (300).

4. Appareil selon la revendication 1, **caractérisé en ce que** l'élément de rejet (201, 203, 204, 205, 205') est monté de sorte que, au cours du rejet, il s'arrête alors que le flux massique (M) d'articles en forme de tige (R) sur un convoyeur (10) se déplace avec des articles en forme de tige défectueux (Rd), en réponse à un signal de commande provenant du contrôleur (300).

5. Appareil selon la revendication 1, **caractérisé en ce que** l'élément de rejet (201, 203, 204, 205, 205') est adapté de sorte que, au cours du rejet, il s'arrête conjointement avec le flux massique (M) d'articles en forme de tige (R) sur un convoyeur (10), en réponse à un signal de commande provenant du contrôleur (300).

6. Appareil selon l'une quelconque des revendications 1 à 5, **caractérisé en ce que** l'unité de rejet (200) comprend en outre au moins un élément de retenue (202, 202'), disposé sur le côté opposé du flux massique (M) par rapport à l'élément de rejet (201, 203, 204, 205, 205'), l'élément de retenue (202, 202') étant adapté pour rejeter l'article en forme de tige défectueux (Rd) et pour retenir les articles en forme de tige (R) situés autour de l'article en forme de tige défectueux (Rd) à rejeter.

7. Appareil selon l'une quelconque des revendications 1 à 6, **caractérisé en ce que** l'unité de surveillance (100) est adaptée pour déterminer optiquement les paramètres géométriques des surfaces frontales des articles en forme de tige (R), en particulier la symétrie, la régularité de la forme de la surface frontale d'un article en forme de tige, la continuité de l'enveloppe, l'enroulement de l'enveloppe, et la symétrie d'éléments d'insertion visibles depuis le côté frontal de l'article en forme de tige (R).

8. Appareil selon l'une quelconque des revendications 1 à 7, **caractérisé en ce que** l'élément de rejet (201, 203, 204, 205, 205') peut être un poussoir, un air comprimé, une pression manométrique, un élément de traction tel qu'une pince ou une aiguille d'extraction à extrémité crochue.

9. Procédé de rejet d'articles en forme de tige défectueux à partir d'un flux massique d'articles en forme de tige sur un convoyeur, **caractérisé en ce qu'**il comprend des étapes au cours desquelles il y a :
l'enregistrement d'images de surfaces frontales opposées du flux massique (M) d'articles en forme de tige (R) au moyen d'enregistreurs optiques (101) ;
l'identification d'articles en forme de tige défectueux (Rd) dans le flux massique (M) au moyen d'un contrôleur (300) sur la base d'images des surfaces latérales du flux massique (M) en utilisant les critères relatifs à des paramètres géométriques des surfaces frontales opposées d'articles en forme de tige (R), et
la détermination d'une position d'articles en forme de tige défectueux (Rd) dans le flux massique (M) sur le convoyeur (10) ; et
la détermination d'une vitesse du flux massique (M), et en outre
la génération de signaux de commande pour que l'unité de rejet (200) déplace l'élément de rejet vers une position de rejet déterminée sur la base de la position des articles en forme de tige défectueux (Rd) identifiés dans le flux massique (M) sur le convoyeur (10) et de la vitesse du flux massique (M),
le déplacement de l'élément de rejet de l'unité de rejet (200) dans une direction en aval du flux massique (M) par rapport à l'unité de surveillance (100) de manière synchrone conjointement avec le flux massique (M) vers la position de rejet et un article en forme de tige défectueux (Rd) identifié rejeté du flux massique (M) d'articles en forme de tige (R) en réponse à des signaux de commande provenant du contrôleur (300).

10. Procédé selon la revendication 9, **caractérisé en ce que**, au moyen du contrôleur (300), en se basant sur la position relative des articles en forme de tige défectueux (Rd) sélectionnés dans le flux massique (M) d'articles en forme de tige (R), la séquence de rejet des articles en forme de tige défectueux (Rd) du flux massique (M) est déterminée.

11. Procédé selon la revendication 10, **caractérisé en ce que** la séquence de rejet des articles en forme de tige défectueux (Rd) du flux massique (M) est telle que les articles en forme de tige défectueux (Rd) sont rejetés en commençant par la couche supérieure du flux massique.

12. Procédé selon l'une quelconque des revendications 9 à 11, **caractérisé en ce que**, au moment du rejet des articles en forme de tige défectueux (Rd), la vitesse des articles en forme de tige (R) dans le flux massique (M) est réduite.

13. Procédé selon l'une quelconque des revendications 9 à 12, **caractérisé en ce que**, au moment du rejet de l'article en forme de tige défectueux (Rd), le transport des articles en forme de tige (R) dans le flux massique (M) est arrêté.

14. Procédé selon l'une quelconque des revendications 9 à 11, **caractérisé en ce que**, au moment du rejet de l'article en forme de tige défectueux (Rd), la vitesse de l'unité de rejet (200) est réduite.

15. Procédé selon l'une quelconque des revendications 9 à 11, **caractérisé en ce que**, au moment du rejet de l'article en forme de tige défectueux (Rd), l'unité de rejet (200) est arrêtée.

16. Système de détermination de la qualité d'articles en forme de tige dans l'industrie du tabac comprenant
un premier appareil (1) pour le rejet d'articles en forme de tige défectueux (Rd) à partir d'un flux massique (M) d'articles en forme de tige (R) sur un convoyeur (10), comme dans l'une quelconque des revendications 1 à 12,
au moins un chargeur, un plateau, un déchargeur, un convoyeur à bande ou un magasin tampon placé en aval du premier appareil pour le rejet d'articles en forme de tige défectueux,
au moins un appareil de surveillance placé en aval d'un chargeur, d'un plateau, d'un déchargeur, d'un convoyeur à bande ou d'un magasin tampon, cet appareil de surveillance comprenant une unité de surveillance (100) comportant des enregistreurs optiques (101') enregistrant des images des surfaces latérales opposées du flux massique (M) d'articles en forme de tige (R) sur le convoyeur (10), et un contrôleur (300) adapté pour identifier des articles en forme de tige défectueux (Rd) dans le flux massique sur la base des images enregistrées, en utilisant un critère concernant les paramètres géométriques des surfaces frontales opposées d'articles en forme de tige (R), qui, en se basant sur les images enregistrées, en utilisant des critères concernant des paramètres géométriques des surfaces frontales opposées des articles en forme de tige (R), identifie des articles en forme de tige défectueux (Rd) dans le flux massique (M), pour établir le changement de la qualité des articles en forme de tige dans le flux massique après avoir traversé un chargeur, un plateau, un déchargeur, un convoyeur à bande ou un magasin tampon.

17. Système selon la revendication 16, **caractérisé en ce que**
le contrôleur de l'appareil de surveillance (300') détermine en outre la position des articles en forme de tige défectueux (Rd) dans le flux massique (M) sur le convoyeur (10), et détermine la vitesse du flux massique (M), puis génère des signaux de commande de l'unité de rejet (200), et le système est en outre doté des éléments suivants
une unité de rejet (200') comprenant un élément de rejet et un élément de retenue adaptée pour rejeter l'article en forme de tige défectueux (Rd), adaptée pour se déplacer en aval du flux massique (M) vers une position lui permettant de rejeter l'article en forme de tige défectueux (Rd) en réponse à des signaux de commande provenant du contrôleur (300').

18. Système selon la revendication 16 ou 17, **caractérisé en ce que** le système comprend un second appareil pour le rejet des articles en forme de tige défectueux (Rd) du flux massique d'articles en forme de tige (R) sur le convoyeur (10), comme dans l'une quelconque des revendications 1 à 12.
